# EUROPEAN PATENT APPLICATION

(11) **EP 2 858 188 A1**
(43) Date of publication of application: **08.04.2015**
(21) Application number: 13796277.5
(22) Date of filing: 20.05.2013
(51) Int. Cl.: H02B 13/02, H01H 33/662, H02B 1/20, H02B 1/30, H02B 3/00

(54) **SWITCHGEAR AND SWITCHGEAR ASSEMBLING METHOD**

(30) Priority: 31.05.2012 JP 2012123889
(71) Applicant: Hitachi, Ltd., Tokyo 100-8280 (JP)
(72) Inventor: MORITA, Ayumu, Tokyo 100-8280 (JP); TSUCHIYA, Kenji, Tokyo 100-8280 (JP)
(74) Representative: MERH-IP Matias Erny Reichl Hoffmann
(86) International application number: PCT/JP2013/063895
(87) International publication number: WO 2013/179925

(57) **Abstract**

The present invention has an object to provide a switchgear capable of improving workability and a switchgear assembling method. The switchgear according to the present invention has: a plurality of switch units 2, 3, 4, 5 having a movable electrode horizontally driven and brought into contact with or opened from a stationary electrode; a plurality of operation mechanisms 8,9 that operate the movable electrodes in the plurality of switch units 2, 3, 4, 5; connection members 13, 14 provided in the switch units 2, 3, 4, 5 and connected to buses A, B; and a casing that includes all the connection members 13, 14, the plurality of switch units 2, 3, 4, 5, and the plurality of operation mechanisms 8, 9. The switch units 2, 3, 4, 5 are arranged in a height direction. The plurality of operation mechanisms 8, 9 are provided on the front side or the rear side of the casing. The plurality of bus connection members 13, 14 are provided on the other side of the casing.

## Description

### Technical Field

The present invention relates to a switchgear and a switchgear assembling method, and more particularly, to a switchgear with improved assembly workability upon production and on-site assembling.

### Background Art

In recent years, as a countermeasure against the global warming issue, a high voltage switchgear without sulfur hexafluoride gas (SF₆ gas) attracts attention. There are various types of insulation methods such as compressed air insulation in which a tank is filled with high-pressure dry air, vacuum insulation mainly using vacuum as insulating medium, and solid insulation in which epoxy resin is filled around a high voltage member.

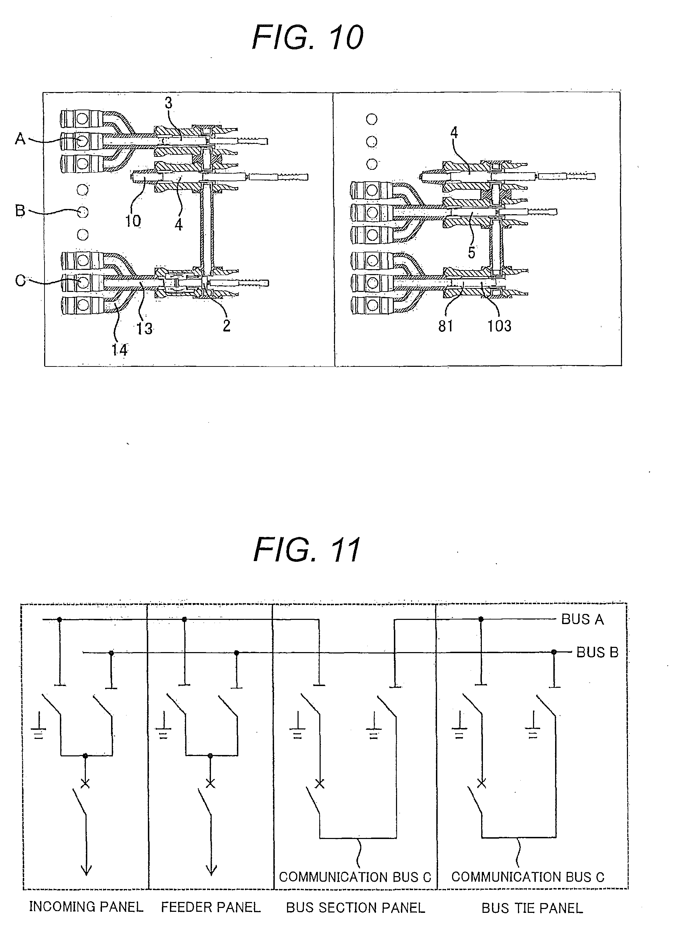

Generally, the structure of the switchgear is divided into three types: a feeder panel for feed to a load; a bus section panel to separate a bus; and a bus tie panel to connect two buses. Each section is of single-bus type or double-bus type in correspondence with the number of buses. Figure 11 shows a one-line wiring diagram of a double-bus type switchgear. Note that it is considered that an incoming panel for power receiving has the same main circuitry as that of the feeder panel.

The main circuit parts in these switchgears respectively have a combination of a breaker, a disconnector, a grounding switch and a bus. More particularly, a circuitry described in ,for example, Patent Literature 1 is known. In Patent Literature 1, various switchgear circuitries are realized by combining a solid insulation type breaker, a disconnector and a grounding switch.

### Citation List

### Patent Literature

Patent Literature 1: Japanese Patent Application Laid-Open No. 2007-306791

### Summary of Invention

### Technical Problem

As described above, as plural switches such as a breaker, a disconnector and a grounding switch each are connected and arranged inside the switchgear, improvement in on-site assembly workability is required. Especially, since buses and cables are built when the respective switchgears have been set into a row board (plural switchgears are arrayed) status, the working space is limited, and improvement in on-site workability is required. Further, in the case of a double-bus type switchgear, the number of switches is increased for connection with two pairs of buses, and the working space is further limited.

Therefore, the present invention has an object to provide a switchgear capable of improving assembly workability and a switchgear assembling method. Solution to Problem

To solve the above problems, a switchgear according to the present invention comprises: a plurality of switch units having a stationary electrode, and a movable electrode opposite to the stationary electrode and driven in a horizontal direction into contact with or opened from the stationary electrode; a plurality of operation mechanisms that operate the movable electrode in the plurality of switch units; a bus connection member, provided in the switch unit, and connected to a bus; and a casing accommodating all the bus connection member, the plurality of switch units and the plurality of operation mechanisms, wherein the plurality of switch units are provided in a height direction, and wherein the plurality of operation mechanisms are provided on a front surface side or a rear surface side of the casing, further wherein the plurality of bus connection members are provided on the other side of the casing.

Further, an assembling method for a switchgear, according to the present invention, having: a plurality of switch units having a stationary electrode, and a movable electrode opposite to the stationary electrode and driven in a horizontal direction into contact with or opened from the stationary electrode; and a plurality of operation mechanisms that operate the movable electrode in the plurality of switch units, comprises: a step of fixing the switch unit with respect to a base so as to set a driving direction of the movable electrode as a height direction; a step of, after fixing of the switch unit, setting the movable electrode upright so as to set the driving direction to the horizontal direction; and a step of, after the above step, connecting the operation mechanism to the plurality of switch units.

### Advantageous Effects of Invention

According to the present invention, it is possible to provide a switchgear capable of improving assembly workability and a switchgear assembling method.

### Brief Description of Drawings

Figure 1 is a sectional side elevation of a switchgear in Embodiment 1;
Figure 2 is a rear elevation of the switchgear in Embodiment 1;
Figure 3 is a sectional side elevation of a breaker unit in the embodiment;
Figure 4 is a sectional side elevation of a disconnector unit in the embodiment;
Figure 5 is an explanatory diagram of a switchgear assembling method in the embodiment;
Figure 6 is another explanatory diagram of the switchgear assembling method in the embodiment;
Figure 7 is an explanatory diagram of bus connection upon on site installation in the embodiment;
Figure 8 is a sectional side elevation of the switchgear in Embodiment 2;
Figure 9 is a sectional side elevation of the switchgear in Embodiment 3;
Figure 10 is a sectional side elevation of the switchgear in Embodiment 4; and
Figure 11 is a wiring diagram explaining a circuitry of the switchgear.

### Description of Embodiments

Hereinbelow, preferred embodiments of the present invention will be described using the drawings. Note that the following description merely shows an example of implementation, but is not intended to limit the subject matter of the invention to the following particular aspects. It goes without saying that it is possible to modify the invention in other various forms than the following embodiments.

### <Embodiment 1>

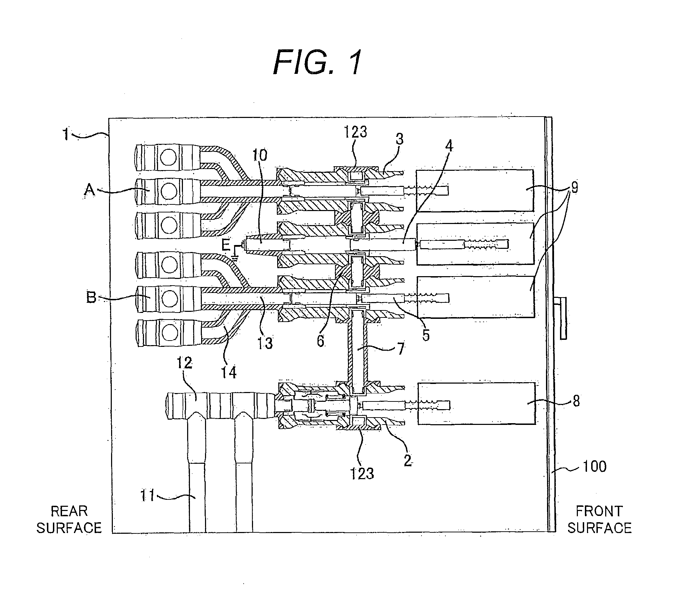

Embodiment 1 will be described using Figure 1 to Figure 7. Note that in the present embodiment, a double-bus type switchgear 1 will be described. Figure 1 corresponds to an incoming panel or a feeder panel in the one-line wiring diagram shown in Figure 11. The switchgear accommodates various devices described below in a casing.

The switch is formed by assembling plural switch units. More particularly, it is formed with one breaker unit 2 provided in a bottom part and three disconnector units 3, 4 and 5 arrayed on the upper side in a height direction of the breaker unit 3. The respective units are interconnected with two types of connecting members 6 and 7. The connecting member 6 is a member to connect disconnector units. The center disconnector unit 4 is used as a grounding switch to be described below. As the interval between the disconnector units is narrowed, the length of the connecting member 6 is short in comparison with the connecting member 7. The connecting members 6 and 7 are formed by covering the periphery of a conductor with insulating material such as resin. A bushing 10 is connected to the disconnector unit 4, and the bushing 10 is grounded E (earthed). That is, the disconnector unit 4 functions as a grounding switch. Note that in a normal operation status, the bushing 10 is grounded as described above. However, it is separated from the earth in accordance with necessity, and is available as a withstand-voltage test terminal for a cable 11.

A first bus A is connected to the disconnector unit 3, and a second bus B is connected to the disconnector unit 5, respectively. Two types of connecting members 13 and 14 are used for connection between the respective units and the buses. The connecting member 13 has a linear shape, and the connecting member 14 is curved so as to avoid spatial interference by phase. In the present embodiment, with respect to a V phase bus having an intermediate height, the remaining U phase and W phase buses are provided above and below in symmetrical positions with respect to the V phase bus. By aligning the positions of the V phase (the three phases are referred to as U phase, V phase and W phase) of the disconnector units 3 and 5 and the V phase of the buses A and B in the height direction, and by providing the U phase and W phase in symmetrical positions with respect to the V phase, only one type of connecting member 14 is curved.

The cable 11 to supply electric power to the load is connected to the stationary side of the breaker unit 2 via a cable head 12. In the present embodiment, an example where two cables are connected so as to ensure a current capacity is shown. Of course, the number of cables is not limited to two. It is possible to change the number of cables in correspondence with installation environment.

As described above, the incoming panel and the feeder panel are formed by mutually connecting the breaker unit 2, the disconnector units 3, 4 and 5, the cable 11 and the buses A and B.

The breaker unit 2 and the disconnector units 3, 4 and 5 are provided such that their movable parts are driven in a horizontal direction with respect to the switchgear 1, and the units are arrayed in a height direction of the switchgear 1. An operation mechanism to drive the movable parts, i.e., a breaker unit operation mechanism 8 and a disconnector unit operation mechanism 9 are provided on the front side of the switchgear 1 so as to be accessible for the operator. Note that an openable/closable cover 100 is attached to the front side.

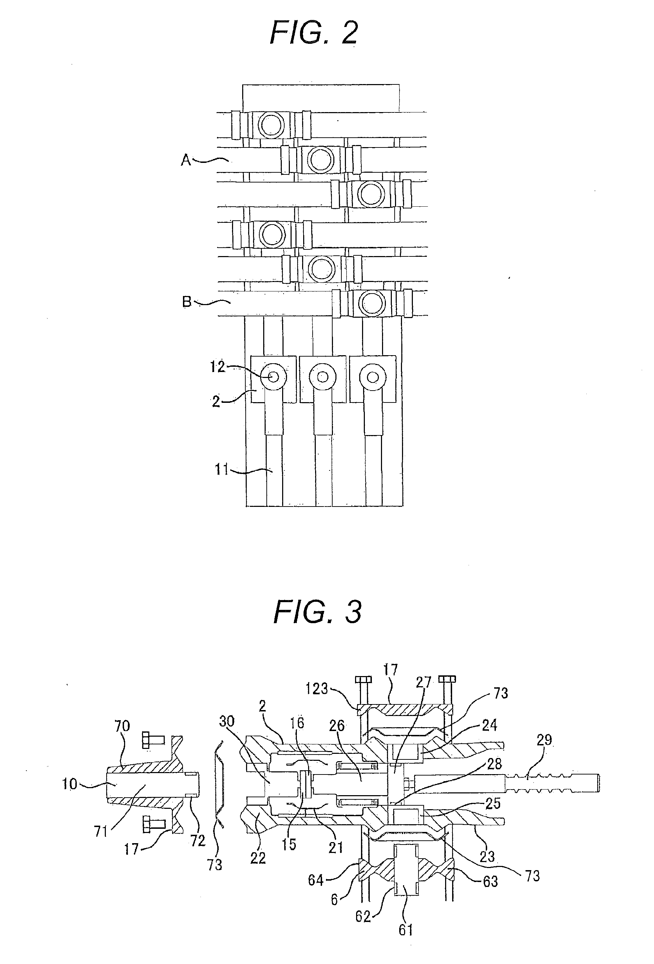

Next, the breaker unit 2 will be described using Figure 3. As the method of connection between the breaker unit 2 and the connecting member 7 and the cable head 12 is common to the method of connection between the connecting member 6 and the respective switch units among the switch units, and the method of connection between the connecting member 13 and the respective switch units among the respective switch units and the buses, these methods will also be described using Figure 3. Note that reference numeral 123 denotes a cover for insulation used when the switch units of the breaker unit 2 and the disconnector units 3, 4 and 5 are positioned at the end of connected units. Figure 3 shows the breaker unit. The figure does not show a case where the breaker unit 2 is provided in the position of the breaker unit 2 in Figure 1 but a case where it is provided in a position where the connecting member is not connected to the upper side of the unit as in the case of, for example, the disconnector unit 3 in Figure 1.

The breaker unit 2 has a stationary electrode 15 and a movable electrode 16 opposite to the stationary electrode 15 and horizontally driven to contact with or opened from the stationary electrode 15 in a vacuum valve having vacuum-sealed inside. The stationary electrode 15 is connected to a stationary conductor 30 extending in the horizontal direction on the rear surface side. The movable electrode 16 is connected to a movable conductor 26 extending in the horizontal direction on the front surface side. The stationary conductor 30 of the vacuum valve 21 is connected to the bushing 10 for connection to the cable head 12. The bushing 10 is formed with a porcelain tube 70 and a central conductor 71. The central conductor 71 is provided with a band contact 72 for electrical continuity with the stationary conductor 30. Note that in the present embodiment, as described later, since the breaker unit is provided only in a connection part with the cable, the breaker unit is connected to the bushing 10. However, it may be connected with the connecting member 13. The structure of the present embodiment has compatibility to easily change the connection to the bushing 10 and the connection with the connecting member 13 in correspondence with installation environment. That is, the breaker unit 2 and the disconnector units 3, 4 and 5 have the structure of the connecting member in common.

The movable conductor 26 has a bellows between the movable conductor and a vacuum vessel, to maintain the hermeticity in the vacuum vessel while allow movability of the movable conductor 26. The movable conductor 26 extends from the inside of the vacuum vessel to the outside of the vacuum vessel, and fixes a member 27 outside the vacuum vessel. A band contact 28 for collecting with respect to the conductors 24 and 25 is provided on the periphery of the member 27. Further, an insulating rod 29 is connected to a front side end of the movable conductor 26, and the insulating rod 29 itself is driven in the horizontal direction with the breaker unit operation mechanism 8. The movable conductor 26 and the movable electrode 16 are also driven in the horizontal direction in accordance with the movement of the insulating rod 29 in the horizontal direction.

In the breaker unit 2, resin 22 such as epoxy for insulation is molded around the vacuum valve 21, and its external surface is covered with conductive coating material 23. The conductive coating material 23 has the ground potential to ensure contact safety for people with respect to this part.

The two conductors 24 and 25 are provided in upper and lower positions of a side surface (height direction) of the breaker unit 2. The conductor (the conductor 25 in Figure 3) is engaged with the connecting member 6 to ensure electrical continuity between the units. The connecting member 6 has a central conductor 61 and a flange 63 of insulating material supporting the central conductor 61. The central conductor 61 is provided with the band contact 62 for slide electrical continuity with a conductor in contact with it (the conductor 25 in Figure 3). Note that in Figure 3, the conductor 25 is engaged with the connecting member 6, however, it may be arranged such that the conductor 24 is engaged with the connecting member 6 in correspondence with installation environment, or the conductor 24 and the conductor 25 are engaged with the separate connecting member 6 or the connecting members 6 and 7, in place of the insulating cover 123. In the structure shown in Figure 1, the connecting member 7 is actually connected with the connector 24, and the connecting member is not connected to the conductor 25 side but the insulating cover 123 is provided. Note that the exterior surface of the flange 63 of insulating material is also covered with conductive coating material 64 for grounding, to ensure the ground safety.

When the bushing 10, the connecting members 6 and 7, the connecting members 13 and 14 and the insulating cover 123 are fixed to the switch unit (the breaker unit 2 or the disconnector unit), a rubber ring 73 is held between the switch unit and the bushing 10, the connecting members 6 and 7, and the insulating cover 123. The rubber ring 73 is used to ensure insulation between the central high voltage member and the peripheral earth, and is formed with silicone rubber, EP rubber or the like. The connecting member 6, on the assumption that the switch units are vertically connected, has a vertically line-symmetric shape with respect to the horizontal axis (on the assumption that the switch unit has upper and lower connecting members having the same shape. It goes without saying that when the switch unit is formed with upper and lower connecting members in different shapes, it is necessary to change the connecting member 6 to have a shape to be engaged with the switch unit). Regarding the bushing 10, the connecting member 7, the connecting members 13 and 14, and the insulating cover 123, the surface opposite to the surface on the side connected to the switch unit is a flat member 17. They are stationary with fastening members such as bolts from the flat member 17 via the rubber ring 73 to the switch unit.

In the present embodiment, the bushing 10 connected to the breaker unit 2 is connected to the cable head 12 on the rear surface side of the switchgear 1 and is connected to the cable 11.

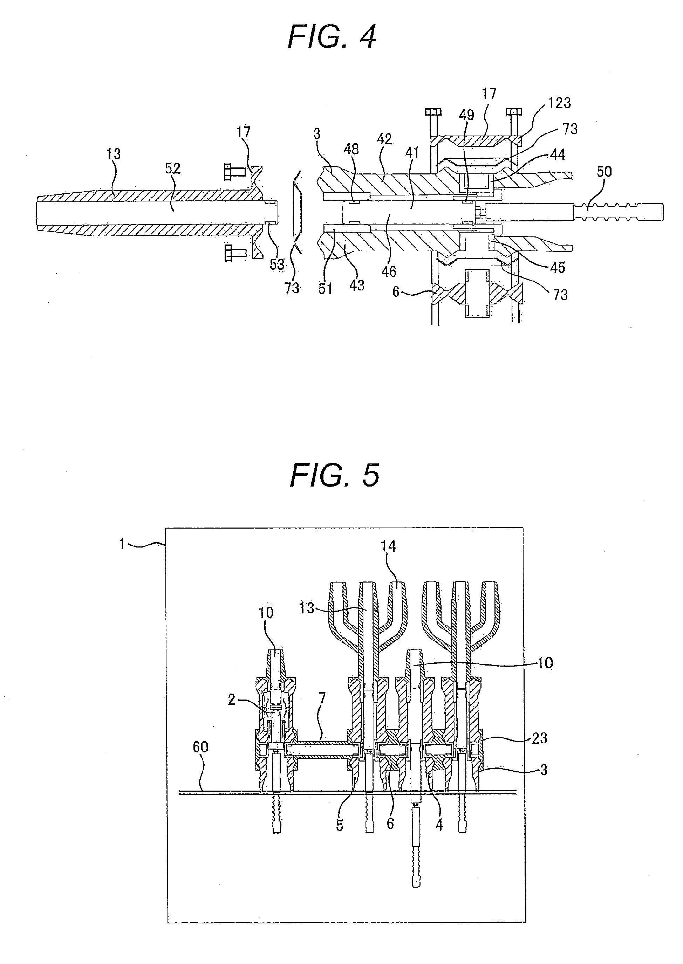

Next, the structure of the disconnector unit 3 will be described using Figure 4. The disconnector unit in the figure is provided in a position in which the connecting member is not connected on the upper side of the unit, as in the case of the disconnector unit 3, in Figure 1. The connecting member 6 and the connecting member 7, in place of the insulating cover 123 are connected to the other disconnector units 4 and 5. Further, in place of the connecting member 6, the connecting member 7 may be connected to the lower side. For example, in the disconnector unit 5, the connecting member 7 in place of the connecting member 6 is connected to the lower side.

In the disconnector units 3, 4 and 5, since it is not necessary to have current breaking performance as long as they have a surge withstand voltage,upon opening, they have, not the vacuum valve, but an air switch 41, and have a stationary conductor 51 which also functions as a stationary electrode, and a movable conductor 46 extending in the horizontal direction. The conductor 46 has a band contact 48, corresponding to a movable electrode, which is opposite to the stationary conductor 51 and is driven in the horizontal direction into contact with or opened from the stationary conductor 51. The stationary conductor 51 of the air switch 41 is connected to a central conductor 52 provided at the center of the connecting member 13. The central conductor 52 is provided with a band contact 53 for electrical continuity with the stationary conductor 51. Note that in the present embodiment, the connecting member 13 which extends in the horizontal direction on the rear surface side is described as a representative element, however, the connecting member 14 in place of the connecting member 13 may be connected. Actually, among the three U, V and W phase buses, with respect to the bus having an intermediate height (the V phase surface in the present embodiment), the remaining two phases (the U phase and the V phase) are provided above and below in symmetric positions with respect to the V phase bus having the intermediate height. They do not extend straight in the horizontal direction but need to be curved, therefore, regarding the U phase and the W phase, the connecting member 14 is connected. Further, when it is used as a grounding switch, the bushing 10 in place of the connecting member 13 is connected. In the structure of the present embodiment, to easily change the connection to the bushing 10 and the connection to the connecting members 13 and 14 in correspondence with installation environment, it has compatibility. That is, the structure of the connection member is commonalized among the respective switch units of the breaker unit 2 and the disconnector units 3, 4 and 5.

In the disconnector unit, as in the case of the breaker unit 2, resin 42 such as epoxy for insulation is provided around the air switch 41, and its exterior surface is covered with conductive coating material 43 for grounding. Two conductors 44 and 45 are provided on the side surface of the disconnector unit. The conductors 44 and 45 are engaged with the connecting member 6 and the connecting member 7, to ensure electrical continuity among the units (In Figure 4, the conductor 45 is connected to the connecting member 6). Further, regarding the disconnector unit positioned at an end, the insulating cover 123 in place of the connecting members 6 and 7 is provided on the end side (upper side or lower side. In Figure 4, the upper side corresponds to the end side).

The movable conductor 46 extending in the horizontal direction has a band contact 49 for collection with respect to the conductors 44 and 45 on the periphery of the movable conductor 46, on the front side. Further, an insulating rod 50 is connected to the front side end of the movable conductor 46, and the insulating rod 50 itself is driven in the horizontal direction with the disconnector unit operation mechanism 9. The movable conductor 46 and the band contact 48 are also driven in the horizontal direction in accordance with the operation of the insulating rod 50 in the horizontal direction.

When the bushing 10, the connecting members 6 and 7, the connecting members 13 and 14 and the insulating cover 123 are fixed to the disconnector unit, the rubber ring 73 is held between the disconnector unit and the bushing 10, the connecting members 6 and 7 and the insulating cover 123. The rubber ring 73 is used to ensure insulation between the central high voltage member and the peripheral earth. It is formed with silicone rubber, EP rubber or the like. It is assumed that the switch unit is connected to the upper and lower parts of the connecting member 6, and it has a line-symmetrical shape with respect to the horizontal axis (it is assumed that the switch unit has upper and lower connection members having the same shape. When the switch unit is formed such that the shapes of the upper and lower connection members are different from each other, it goes without saying that it is necessary to change the connecting member 6 to have a shape to be engaged with the switch unit). Regarding the bushing 10, the connecting member 7, the connecting members 13 and 14 and the insulating cover 123, the surface opposite to the surface on the side connected to the switch unit is the flat member 17. They are fixed with fastening members such as bolts from the flat member 17 via the rubber ring 73 to the switch unit. The connection member is basically similar to that of the above-described breaker unit. Since they are similar to each other, they have compatibility and easily replaced with another unit.

In the present embodiment, the connecting members 13 and 14 are connected to the double buses A and B on the rear surface side of the switchgear 1. Figure 2 is a diagram of the switchgear 1 according to the present embodiment viewed from the rear surface side to indicate connection status among the buses and cables. The bus connection members to be connected to the buses A and B are provided so as to be shifted at predetermined intervals in a height direction and the horizontal direction. Further, as it is apparent from the connection members for the buses and the cables in Figure 2 as a rear surface diagram, according to the switchgear 1 according to the present embodiment, the connection members for the on-site connected buses and cables are all positioned on the rear surface side accessible for the operator.

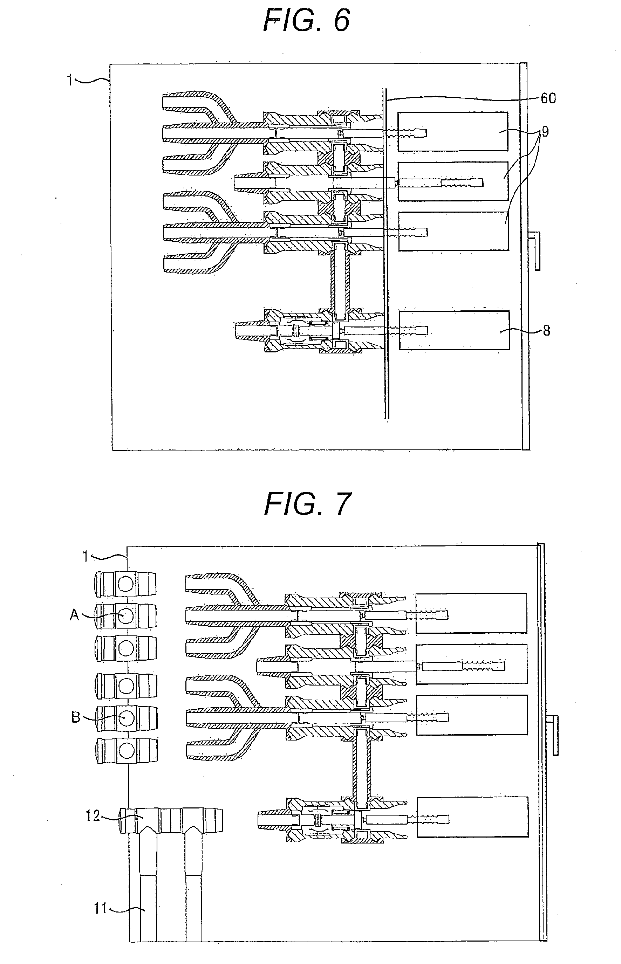

Here the method for assembling the switchgear 1 according to the present embodiment will be described using Figure 5 and Figure 6.

Figure 5 indicates a method for assembling the switch part. The switchgear 1 is set over sideways and the driving direction of the movable electrodes of the respective switch units is the height direction. In the present embodiment, as the breaker unit 2 and the three disconnector units 3, 4 and 5 are used, these switch units are connected using the connecting members 6 and 7 and fixed to the upper part of a base 60. The connecting members 13 and 14 for connection to the buses A and B, and the bushing 10 for connection to the cable 11 are stationary to the respective units.

When the breaker unit 2 and the disconnector unit 3, 4 and 5 have been assembled, as shown in Figure 6, the switchgear 1 is returned to a normal status (it is set upright such that the movable electrode driving direction becomes the horizontal direction), thereafter, the breaker unit operation mechanism 8 and the disconnector unit operation mechanism 9 are installed, and the principal part of the switchgear 1 is completed.

It is necessary to fix the buses A and B and the cable 11 on site. The method for fixing the buses A and B and the cable 11 on site is shown in Figure 7. According to the switchgear 1 in the present embodiment, as the connection members for the buses and the cable are all provided on the rear surface side of the switchgear 1, it is possible to easily perform installation only by access from the rear surface of the switchgear 1 regarding any of these elements.

The movable members of the breaker unit 2 and the disconnector units 3, 4 and 5 forming the switchgear 1 are provided to be driven in the horizontal direction, and the units are arrayed in the height direction of the switchgear. Further, when the principal circuit part is assembled, the switchgear 1 is laid over the sideways. With this structure and the method, it is possible to attach each of the members without working against the gravity. It is possible to improve the assembly workability, and it is advantageous in reduction of the number of steps, i.e. economic efficiency.

According to the present embodiment, since the plurality of switch units having movable electrodes driven in the horizontal direction are arrayed in the height direction (not in spatially twisted positions but in parallel), the operation mechanisms are collectively provided on one side of the switchgear casing, and the connection members for the buses and the cables are collectively provided on the other side of the casing, the connection members for working on site are in positions easily accessible to the operator from the rear surface side of the casing. Thus the workability is improved.

Further, in the present embodiment, the breaker unit and the disconnector unit have compatibility of the connection members for the various types of bushing 10, connecting members 6 and 7, connecting members 13 and 14, insulating cover 123 and the like, and it is possible to easily change the combination in correspondence with installation environment. That is, the commonality of connection between the buses and mutual units is achieved, and various circuitries are easily realized. More particularly, the connection members in the breaker unit and the disconnector unit for the connecting members have a common structure.

Further, in the present embodiment, with respect to the V phase bus having an intermediate height, the remaining two phase buses are provided above and below in positions symmetrical to the V phase bus having the intermediate height. The structure of the connecting member 14, which becomes a connection member for the U phase and W phase buses provided above and below with respect to the V phase bus provided at the intermediate height, is commonalized as one type structure. Accordingly, it is possible to further improve the versatility of the member.

Further, since the buses A and B are also arrayed in the height direction on the rear surface side of the switchgear 1, it is possible to easily perform the attachment of the bus on site.

Note that the present embodiment has been described with the double-bus type switchgear as an example, however, it is possible to form a single-bus type switchgear with a combination of the bus A, the breaker unit 2 and the disconnector units 3 and 4.

### <Embodiment 2>

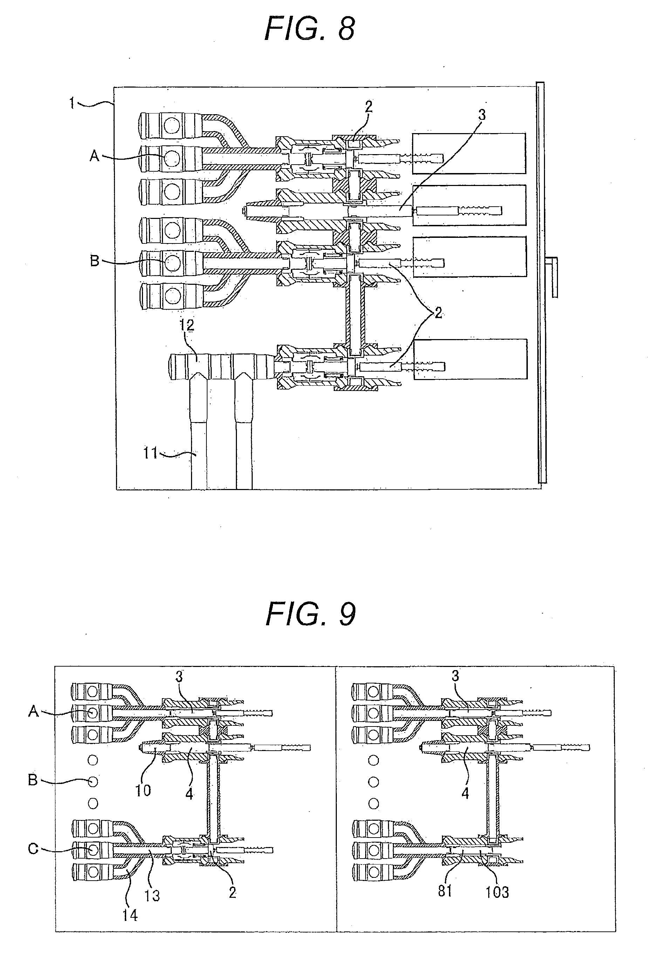

Embodiment 2 will be described using Figure 8. Note that the explanations of overlapping constituent elements between the embodiment and Embodiment 1 (and effects obtained by employing the constituent elements) will be omitted.

In the present embodiment, a case where the disconnector unit in a double-bus type switchgear has current breaking performance when, e.g., a loop current breaking duty is required of the disconnector, will be described. Figure 8 shows the configuration. Since the disconnector unit 3 of the air switch shown in Figure 4 lacks the breaking capability, the breaker unit 2 shown in Figure 3 described in Embodiment 1 is applied to the disconnector connected to each of the first bus A and the second bus B. Note that it is arranged such that the breaker unit 2 connected to the first bus A and the second bus B ensures inter-electrode withstand voltage defined with the disconnector standards and has surge withstand voltage upon opening.

As described in Embodiment 1, the breaker unit 2 and the disconnector unit 3 have a commonalized structure for connection with various connection members, thus have compatibility. Accordingly, the disconnector connected to each of the first bus A and the second bus B (although it is necessary that the disconnector is compliant with the disconnector standards) is basically obtained by replacing the disconnector unit 3 with the breaker unit 2. In this manner, in correspondence with the user's purpose, it is possible to adopt the circuitry in Figure 1 in Embodiment 1 or to adopt the circuitry in Figure 8 in the present embodiment, by merely selecting the breaker unit 2 or the disconnector unit 3.

### <Embodiment 3>

Embodiment 3 will be described using Figure 9. The explanations of overlapping constituent elements between the present embodiment and the above-described embodiments will be omitted.

The present embodiment is an example where bus section panel is realized in a double-bus type switchgear. The bus section panel is formed with left and right switchgears in a row-board structure as shown in Figure 9. The circuitry of the bus section panel is also shown in Figure 11.

The bus section panel is provided with, in place of the cable 11 provided in the incoming panel and the feeder panel, a communication bus C to connect the left and right switchgears. Since connection is made with the communication bus C, it is not necessary that the two switchgears are provided with the breaker unit, as long as one switchgear is provided with the breaker unit. In the structure shown in Figure 9, only the switchgear provided on the left side has the breaker unit 2. The connecting members 13 and 14, in place of the bushing 10, are connected to the breaker unit 2 (it is desirable that the connecting member 13 is provided in a phase positioned in the middle of the height direction and the connecting member 14 is provided in a phase arranged above and below symmetrically with respect to the phase positioned in the middle of the height direction. This point is similar to the above-described embodiments) for connection with the communication bus C. In a switchgear without a breaker unit, a disconnector unit 103 is provided in place of the breaker unit 2, and the disconnector unit 103 is connected to the communication bus C on the rear surface side.

Further, in the switchgear applied to the bus section panel, as it is not a double-bus type using the above-described buses A and B (except the communication bus C), and one disconnector unit can be omitted.

Note that when the switchgear is formed as in the case of the present embodiment, since the connection structure of the connecting members 13 and 14 and the bushing 10 with respect to the breaker unit 2 and that with respect to the disconnector unit 3 are commonalized, the connection structure between the communication bus C and the breaker unit 2 is made with the same members as those of the connection structure with respect to the buses A and B. Note that as described above, the breaker unit 2 is not necessary in the right side switchgear, and the disconnector unit 103 is utilized for connection. It is not necessary to operate the movable conductor 81 and the movable conductor is fixed inside. That is, regarding the disconnector unit 103, the operation mechanism is not necessary.

That is, it is possible to easily assemble the bus section panel using the switchgear described in the above-described embodiments.

### <Embodiment 4>

Embodiment 4 will be described using Figure 10. In the present embodiment, the explanations of overlapping constituent elements between the present embodiment and the above-described embodiments will be omitted.

The present embodiment is an example where a bus tie panel is realized in a double-bus type switchgear. The bus tie panel is formed with left and right switchgears in a row-board structure as shown in Figure 10 as in the case of the bus section panel described in Embodiment 3. The circuitry of the bus tie panel is also shown in Figure 11. In the bus tie panel, the difference from the bus section panel described in Embodiment 3 is that in the double buses A and B, different buses are connected in the left and right switchgears (when one bus is the bus A, the other bus is the bus B).

Also in the present embodiment, since the connection structure of the connecting members 13 and 14 and the bushing 10 with respect to the breaker unit 2 and that with respect to the disconnector unit 3 are commonalized, the connection structure between the communication bus C and the breaker unit 2 is made with the same members as those of the connection structure with respect to the buses A and B.

That is, it is possible to easily assemble the bus tie panel using the switchgear as described in the above-described embodiments.

Note that the combinations described in the above-described embodiments is an example, and it is also a good merit of the present invention that other various combinations are realized in correspondence with installation environment. Reference Signs List

1...switchgear
2...breaker unit
3,4,5,103...disconnector unit
6,13,14...connecting member
8...breaker unit operation mechanism
9...disconnector unit operation mechanism
10...bushing
11...cable
12...cable head
15...stationary electrode
16...movable electrode
17...flat member
21...vacuum valve
22, 42...resin
23, 43, 64...conductive coating material
24, 25, 44, 45...conductor
26, 46, 81...movable conductor
27... member
28, 48, 49, 53, 62, 72...band contact
29, 50...insulating rod
30, 51...stationary conductor
41...air switch
52, 61...central conductor
63...flange
73...rubber ring
123...insulating cover
A, B...bus
C...communication bus

## Claims

1. A switchgear comprising:
a plurality of switch units having a stationary electrode, and a movable electrode opposite to the stationary electrode and driven in a horizontal direction into contact with or opened from the stationary electrode;
a plurality of operation mechanisms that operate the movable electrode in the plurality of switch units;
a bus connection member, provided in the switch unit, and connected to a bus; and
a casing accommodating all the bus connection member, the plurality of switch units and the plurality of operation mechanisms,
wherein the plurality of switch units are provided in a height direction,
and wherein the plurality of operation mechanisms are provided on a front surface side or a rear surface side of the casing,
further wherein the plurality of bus connection members are provided on the other side of the casing.

2. The switchgear according to claim 1,
wherein the switch units are interconnected with a connecting member, and in the respective switch units, a connection member for the connecting member is formed to have compatibility.

3. The switchgear according to claim 2,
wherein the switch unit has a breaker unit having current breaking performance and a disconnector unit having surge withstand voltage upon opening,
and wherein the connection member for the connecting member in the breaker unit and the disconnector unit have a common structure so as to have compatibility.

4. The switchgear according to any one of claims 1 to 3,
wherein the switch units of three phases are provided at the same height,
and wherein buses of three phases are provided at different heights,
further wherein among the buses of three phases, with respect to the bus having an intermediate height, the remaining buses of two phases are provided above and below in approximately symmetrical positions from the bus having the intermediate height,
further wherein regarding the shape of the bus connection member connecting the switch unit and the bus, the bus connection members provided above and below with respect to the bus at the intermediate height have a common shape.

5. The switchgear according to any one of claims 1 to 4,
wherein the switch unit has:
an insulating rod that is connected to the operation mechanism and that operates in a horizontal direction;
a movable conductor that operates in the horizontal direction in accordance with driving of the insulating rod;
a conductor provided above and below with respect to the insulating rod and the movable conductor; and
a band contact in slide electrical continuity with the conductor and electrically connected to the movable conductor,
wherein the switch unit and the connection member for the conductor connected to the switch unit have a rubber ring.

6. The switchgear according any one of claims 1 to 5,
wherein the bus is doubled for each phase,
and wherein the switchgear has the breaker unit having current breaking performance and three disconnector units arrayed on the upper side in the height direction of the breaker unit,
further wherein the disconnector unit has surge withstand voltage upon opening,
further wherein among the three disconnector units, one disconnector unit is connected to one bus of the double buses, and another disconnector unit is connected to the other bus of the double buses, and the remaining one disconnector unit is formed to enable switching to electrical continuity with the ground side or disconnection,
further wherein the breaker unit is connected to a cable.

7. The switchgear according to claim 6,
wherein among the disconnector units, the two disconnector units connected to the double buses further have current breaking performance.

8. A switchgear having a row-board structure of the two switchgears according to any one of claims 1 to 5,
wherein one switchgear has a breaker unit having current breaking performance and two disconnector units arrayed on the upper side in the height direction of the breaker unit,
and wherein the disconnector unit has surge withstand voltage upon opening,
further wherein in the two disconnector units, one disconnector unit is connected to one bus of the double buses, while the other disconnector unit is formed to enable switching to electrical continuity with the ground side or disconnection,
further wherein the breaker unit is connected to a communication bus,
further wherein the other switchgear has three disconnector units arrayed in the height direction,
further wherein the disconnector unit has surge withstand voltage upon opening,
further wherein among the three disconnector units, one disconnector unit is connected to one bus of the double buses, another disconnector unit is formed to enable switching to electrical continuity with the ground side or disconnection, and the remaining one disconnector is connected to the communication bus.

9. A switchgear having a row-board structure of the two switchgears according to any one of claims 1 to 5,
wherein one switchgear has a breaker unit having current breaking performance and two disconnector units arrayed on the upper side in the height direction of the breaker unit,
and wherein the disconnector unit has surge withstand voltage upon opening,
further wherein in the two disconnector units, one disconnector unit is connected to one bus of the double buses, and the other one disconnector unit is formed to enable switching to electrical continuity with the ground side or disconnection,
further wherein the breaker unit is connected to the communication bus,
further wherein the other switchgear has three disconnector units arrayed in the height direction,
further wherein the disconnector unit has surge withstand voltage upon opening,
further wherein among the three disconnector units, one disconnector unit is connected to the bus which is not the one bus of the double buses, and another disconnector unit is formed to enable switching to the electrical continuity with the ground side or disconnection, and the remaining one disconnector unit is connected to the communication bus.

10. The switchgear according to any one of claims 6 to 9,
wherein in the respective breaker units and the disconnector units, the respective movable electrodes are electrically interconnected,
and wherein in the unit having current breaking performance, the stationary electrode and the movable electrode are formed by resin molding a vacuum valve with vacuum-sealed inside, and the stationary electrode is electrically connected to the cable,
further wherein the disconnector unit is formed by resin molding the air insulating switch.

11. An assembling method for a switchgear having:
a plurality of switch units having a stationary electrode, and a movable electrode opposite to the stationary electrode and driven in a horizontal direction into contact with or opened from the stationary electrode; and
a plurality of operation mechanisms that operate the movable electrode in the plurality of switch units, comprising:
a step of fixing the switch unit with respect to a base so as to set a driving direction of the movable electrode as a height direction;
a step of, after fixing of the switch unit, setting the switch unit upright so as to set the driving direction to the horizontal direction; and
a step of, after the above step, connecting the operation mechanism to the plurality of switch units.
